Europäisches Patentamt

European Patent Office

Office européen des brevets

(19)

(11) Numéro de publication : **0 279 708 B1**

(12) # FASCICULE DE BREVET EUROPEEN

(45) Date de publication du fascicule du brevet :
**17.04.91 Bulletin 91/16**

(51) Int. Cl.⁵ : **F16K 31/365,** G05D 16/06,
**F17C 13/04**

(21) Numéro de dépôt : **88400002.7**

(22) Date de dépôt : **04.01.88**

(54) **Détendeur de gaz à membrane articulée.**

(30) Priorité : **26.01.87 FR 8700853**

(43) Date de publication de la demande :
**24.08.88 Bulletin 88/34**

(45) Mention de la délivrance du brevet :
**17.04.91 Bulletin 91/16**

(84) Etats contractants désignés :
**DE ES GB IT**

(56) Documents cités :
**EP-A- 0 150 143**
**FR-A- 973 502**
**FR-A- 1 105 310**
**FR-A- 1 537 877**
**FR-A- 2 579 337**
**GB-A- 1 441 338**
**US-A- 3 900 045**

(73) Titulaire : **BRIFFAULT, Société dite:**
**Résidence "La Belle Epoque" 11, Impasse**
**Gaudelet**
**F-75011 Paris (FR)**

(72) Inventeur : **Huet, Alain**
**31, rue Charles Michels**
**F-27340 Pont De L'Arche (FR)**
Inventeur : **Mansuy, Alain**
**52, rue Blingue**
**F-27610 Romilly Sur Andelle (FR)**
Inventeur : **Mouly, Pierre**
**Chemin de la Forêt Flipou**
**F-27380 Fleury Sur Andelle (FR)**

(74) Mandataire : **Bourgognon, Jean-Marie et al**
**Cabinet Flechner 22, Avenue de Friedland**
**F-75008 Paris (FR)**

## Description

La présente invention est relative aux appareils de régulation utilisant une membrane pour maintenir une pression de sortie sensiblement constante, quels que soient la pression et le débit d'entrée et, plus particulièrement, à des détendeurs de gaz.

Au brevet des Etats-Unis d'Amérique numéro 3 900 045, on décrit un détendeur de gaz comprenant une membrane dont l'une des faces est solidaire d'un plateau et dont le pourtour est coincé entre un corps et un couvercle. Le corps et le couvercle ont une forme générale de révolution par rapport à un axe. La membrane subdivise l'espace délimité par le corps et par le couvercle en deux chambres. L'une des chambres comporte le plateau et, à distance de l'axe, un ressort le repoussant. L'autre chambre communique, outre avec un raccord de sortie, avec un raccord d'entrée, sur l'embouchure duquel la membrane vient s'appliquer quand le plateau bascule par rapport à un point d'appui prévu entre le ressort et l'embouchure. Le point d'appui et le ressort sont de préférence de part et d'autre de l'axe. Comme le point d'appui est sur le couvercle, tandis que le raccord d'entrée est sur le corps, il est nécessaire de monter le couvercle sur le corps d'une manière très précise, puisque le couvercle n'a pas seulement pour fonction de coincer la membrane et de maintenir le ressort, fonctions pour lesquelles la mise en position du couvercle par rapport au corps peut être grossière et angulairement quelconque autour de l'axe du détendeur, mais aussi de mettre en position le point d'appui par rapport à l'embouchure du raccord d'entrée, fonction qui cette fois-ci nécessite un montage précis tant angulairement que suivant la direction de l'axe du détendeur. Si le point d'appui est à distance, suivant la direction de l'axe du détendeur, de la position qu'il devrait avoir, la membrane vient s'appliquer sur l'embouchure du raccord d'entrée suivant un plan qui est trop ou pas assez incliné, ce qui entraîne un défaut d'étanchéité, et, même si la fermeture s'effectue, le ressort est alors trop tendu ou trop détendu et applique donc à la membrane une force autre que celle pour laquelle le détendeur est prévu. La pression de consigne du gaz au-dessus de laquelle le détendeur doit interrompre l'alimentation n'est pas respectée.

L'invention pallie ces inconvénients par un détendeur dans lequel la précision des positions relatives de l'appui et de l'embouchure ou du siège du raccord d'entrée, avec les avantages de fiabilité de la fermeture et de respect de la pression de fermeture que cela emporte, n'est plus tributaire de l'opération de montage du couvercle sur le corps.

Le détendeur de gaz suivant l'invention comprend une membrane dont l'une des faces est solidaire d'un plateau et dont le pourtour est coincé entre un corps et un couvercle, de forme générale de révolution par rapport à un axe, en subdivisant l'espace délimité par le corps et par le couvercle en deux chambres, dont l'une comporte un ressort repoussant la membrane, et dont l'autre communique outre avec un raccord de sortie, avec un raccord d'entrée sur l'embouchure duquel la membrane vient s'appliquer quand le plateau bascule par rapport à un point d'appui prévu entre le ressort et l'embouchure, le point d'appui et le ressort étant de préférence de part et d'autre de l'axe. Il est caractérisé par des moyens pour retenir le plateau directement au corps.

Les positions relatives de l'appui et de l'embouchure du raccord d'entrée, ménagés l'un sur le plateau et l'autre sur le corps, sont ainsi définies indépendamment du couvercle. Le montage de celui-ci ne peut plus influer sur ces positions relatives, qui sont obtenues directement de fabrication dès après seulement le montage du plateau sur le corps.

Suivant un mode de réalisation préféré, parce que particulièrement simple, les moyens de retenue du plateau au corps sont constitués par le fait que le plateau est articulé au corps. L'articulation permet ainsi à la fois de réaliser le basculement du plateau et sa retenue. Le plateau peut, par exemple, comporter des pattes formant palier pour un axe monté tournant sur le corps. Mais de préférence, l'axe d'articulation est façonné avec le corps en venant notamment de moulage, et le plateau est encliqueté sur cet axe, au moyen de formes adaptées telles que des lèvres élastiques. Bien entendu, il est aussi possible de façonner l'axe d'articulation avec le plateau, notamment en le faisant venir de moulage avec celui-ci et d'encliqueter le corps sur cet axe au moyen de lèvres élastiques. Lors du basculement du plateau, la membrane qui est en contact avec lui, peut subir des contraintes internes qui sont défavorables à une régulation fine. Pour y remédier, il est bon que le plateau soit articulé au corps de manière à avoir, en plus du mouvement de basculement, un autre degré de liberté en déplacement, notamment de manière à pouvoir se déplacer suivant un trajet perpendiculaire à l'axe. Cela permet un ajustement latéral du plateau pour relâcher les contraintes qui s'appliquent sur la membrane. On peut, par exemple, prévoir, à cet effet, des paliers oblongs à grand axe s'étendant perpendiculairement à l'axe du détendeur, pour le logement de l'axe d'articulation.

Au dessin annexé, donné uniquement à titre d'exemple :

la figure 1 est une vue en coupe d'un détendeur suivant l'invention, et

la figure 2 est une vue d'un détail.

Le détendeur de gaz représenté au dessin comprend une membrane 1 en matière élastomère. La membrane 1 est solidaire d'un plateau 2. Le pourtour de la membrane 1 est coincé entre un corps 3 et un couvercle 4, tous deux de forme générale de révolution, par rapport à un axe X, X'. La membrane subdivise l'espace délimité par le corps 3 et par le couvercle 4 en deux chambres A, B. La chambre A, du côté du couvercle, comporte, à distance de l'axe X, X', un ressort 6 dont l'une des extrémités s'appuie sur le sommet du couvercle 4 et dont l'autre extrémité repousse la membrane 1 vers la chambre B. Celle-ci communique avec un raccord d'entrée 7 et avec un raccord de sortie 8. Le plateau 2 solidaire de la membrane 1 est articulé, par un axe 9 d'articulation, sur deux paliers 10 venus de moulage avec le corps 3. L'axe 9 représente un point d'appui prévu entre le ressort 6 et l'embouchure du raccord d'entrée 7 dans la chambre B, autour duquel le plateau 2 et la membrane 1 peuvent basculer, celle-ci venant s'appliquer sur l'embouchure du raccord d'entrée 7 ou s'en éloignant.

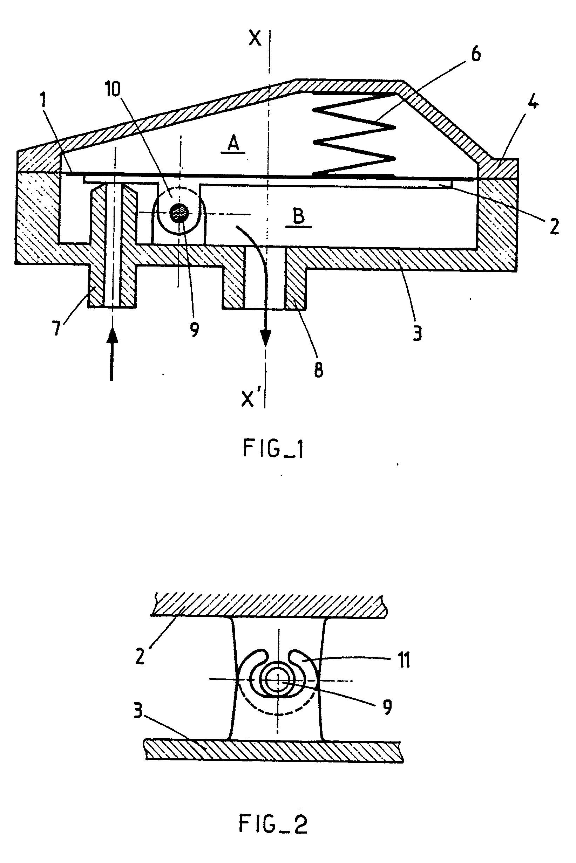

La figure 2 montre que l'articulation du plateau 2 au corps 3 s'effectue par un palier 11 oblong, permettant à l'axe 9 d'articulation du plateau 2 de se débattre latéralement.

## Revendications

1. Détendeur de gaz, comprenant une membrane (1) dont l'une des faces est solidaire d'un plateau (2) et dont le pourtour est coincé entre un corps (3) et un couvercle (4) en subdivisant l'espace délimité par le corps (3) et par le couvercle (4) en deux chambres (A, B), dont l'une (A) comporte un ressort (6) repoussant la membrane (1), et dont l'autre (B) communique, outre avec un raccord de sortie (8), avec un raccord d'entrée (7) sur l'embouchure duquel la membrane (1) vient s'appliquer quand le plateau (2) bascule par rapport à un point d'appui prévu entre le ressort (6) et l'embouchure, caractérisé par des moyens (9, 10) pour retenir le plateau (2) directement au corps (3).

2. Détendeur de gaz suivant la revendication 1, caractérisé en ce que les moyens de retenue du plateau (2) au corps (3) sont constitués par le fait que le plateau (2) est articulé au corps (3).

3. Détendeur de gaz suivant la revendication 2, caractérisé en ce que le plateau (2) est articulé au corps (3), de manière à avoir, en plus du mouvement de basculement, un autre degré de liberté en déplacement, notamment à pouvoir se déplacer suivant un trajet perpendiculaire à l'axe (X, X').

4. Détendeur de gaz suivant la revendication 1, 2 ou 3, caractérisé par une liaison par encliquetage du plateau (2) et du corps (3).

## Ansprüche

1. Reduzierventil für Gase mit einer Membran (1), deren eine Fläche verbunden ist mit einer Platte (2) und deren Umfang zwischen einem Gehäuse (3) und einem Deckel (4) festgeklemmt ist, und die den durch das Gehäuse (3) und den Deckel (4) begrenzten Raum unterteilt in zwei Rammern (A, B), von denen die eine (A) eine Feder (6) enthält die gegen die Membran (1) drückt, und von denen die andere (B) außer mit einem Ausgangsanschlußstutzen (8) mit einem Eingangsanschlußstutzen (7) in Verbindung steht, auf dessen Mündung die Membran (1) zum Aufliegen kommt, wenn die Platte (2) im Verhältnis zu einer Lagerstelle, die zwischen der Feder (6) und der Mündung vorgesehen ist, hin und her schwingt, **gekennzeichnet** durch Mittel (9, 10) zum Halten der Platte (2) direkt an dem Gehäuse (3).

2. Reduzierventil nach Anspruch 1, dadurch **gekennzeichnet**, daß die Mittel zum Halten der Platte (2) an dem Gehäuse (3) dadurch gebildet sind, daß die Platte (2) an dem Gehäuse (3) gelenkig gelagert ist.

3. Reduzierventil nach Anspruch 2, dadurch **gekennzeichnet**, daß die Platte (2) an dem Gehäuse (3) derart gelenkig gelagert ist, daß sie zusätzlich zu der Schwenkbewegung einen weiteren Freiheitsgrad zur Bewegung aufweist, insbesondere für eine Verschiebung längs einer Strecke senkrecht zu der Achse (X, X').

4. Reduzierventil nach Ansprüchen 1, 2 oder 3, **gekennzeichnet** durch eine schnappschlüssige Verbindung von Platte (2) und Gehäuse (3).

## Claims

1. Gas-pressure reducing valve, comprising a membrane (1), one of the sides of which is integral with a plate (2), and the circumference of which is trapped between a body (3) and a cap (4), this membrane (3) subdividing the space defined by the body (3) and the cap (4) into the chambers (A, B), one (A) of which has a spring (6) forcing back the membrane (1), and the other (B) of which communicates both with an outlet connection piece (8) and with an inlet connection piece (7), on the orifice of which latter piece the membrane (1) comes to bear when the plate (2) rocks in relation to a supporting point provided between the spring (6) and the orifice, **characterised by** means (9, 10) for retaining the plate (2) directly on the body (3).

2. Gas-pressure reducing valve according to claim 1, **characterised in that** the means for retaining the plate (2) on the body (3) are formed due to the fact that the plate (2) is articulated on the body (3).

3. Gas-pressure reducing valve according to claim 2, **characterised in that** the plate (2) is articulated on the body (3), so that the said plate has, as well as the rocking movement, another degree of freedom of movement, in particular the ability to move along a path which is perpendicular to the axis (X, X').

4. Gas-pressure reducing valve according to claims 1, 2 or 3, **characterised by** a catch connection of the plate (2) and the body (3).

FIG_1

FIG_2